(19)

Europäisches Patentamt
European Patent Office
Office européen des brevets

(11) **EP 2 921 919 A1**

(12) **EUROPEAN PATENT APPLICATION**

(43) Date of publication:
**23.09.2015 Bulletin 2015/39**

(51) Int Cl.:
**G05B 19/042** (2006.01)    **G06F 19/00** (2011.01)

(21) Application number: **15159909.9**

(22) Date of filing: **19.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **20.03.2014 US 201461955897 P**

(71) Applicant: **Yissum Research Development Company of the Hebrew University of Jerusalem Ltd. Jerusalem 91390 (IL)**

(72) Inventors:
• **Nahmias, Yaakov Rishon Le Zion (IL)**
• **Ezra, Elishai Jerusalem (IL)**

(74) Representative: **Sgobba, Marco et al Perani & Partners Piazza San Babila, 5 20122 Milano (IT)**

(54) **APPARATUS FOR CONTROLLING MICROFLUIDIC COMPONENTS**

(57)    An apparatus for controlling a microfluidic circuit comprises a single microprocessor which is positioned within a single microprocessor module, the single microprocessor being used for performance in real time of: control of microfluidic components within the microfluidic circuit; accumulation of data from sensors of the microfluidic circuit; and analysis of the accumulated data in order to possibly adjust in real time at least one of the components of the microfluidic circuit based on the analysis results, thereby providing a real-time feedback. The apparatus further comprises a digital control bus for communicating digital control signals from the microprocessor module to one or more digitally-controlled microfluidic components and a sensors bus for communicating signals from one or more sensors to the microprocessor module.

Fig. 1 - Prior Art

EP 2 921 919 A1

## Description

### Field of Invention

The invention relates in general to the field of microfluidic components and applications. More specifically, the invention relates to a microprocessor-based apparatus, which is adapted to centrally operate and control an operation of various microfluidic circuits.

### Background of the Invention

Microfluidic circuits range from combinatorial synthesis to high throughput screening, with platforms integrating analog perfusion components, digitally controlled micro-valves and a range of sensors. Typically, microfluidic circuits are distributed in the sense that a variety of control components are used, while each type of control component has its own proprietary language and its own communication protocol respectively. More specifically, discrete control units are typically used to regulate and monitor each component, resulting in distributed control interfaces. Such a distributed structure significantly limits data integration and synchronization, and leads to a significant inefficiency and lack of accuracy.

Microfluidic technology often requires the ability to precisely control experiments on the microscale, while involving a rapid automation of chemical reactions using micromechanical valves, droplets, or electrochemistry. Microfluidics is especially suited for rapid combinatorial synthesis and high-throughput screening due to low reagent cost and precise environmental control. However, the complexity of integrating the experimental measurements with the microfluidic circuits, which partially evolved from said distributed manner of operation have prevented prior art systems from being completely automated processes. It is clear that an automation of complex optimization algorithms in microfluidics could have provided groundbreaking utility to many groups in the field.

The challenge of obtaining accurate synchronization is the most significant barrier that prevents prior art microfluidic systems from being fully automated. Microfluidic platforms often contain a variety of different components, such as analog perfusion components, digitally controlled micro-valves, and experiment-specific sensors, all these are discreetly controlled by different communication protocols, they have different power demands, and typically use different control interfaces. This distribution of control modalities complicates all attempts to obtain process integration and a feedback operation in real-time. For example, sensors often need to be manually synchronized with their respective microfluidic units; therefore their data acquisition can seldom be analyzed in time for performing automatic adjustment of experimental parameters. Furthermore, often microprocessors need to carry out complex optimization algorithms. Evolution of catalysts directed by genetic algorithms in a plug-based microfluidic device tested with oxidation of methane by oxygen. Each of these optimization algorithms presents a different set of challenges, which includes: (a) the implementation of prioritized data structures in a genetic algorithm; (b) distributed computational efforts in multiple-hill climbing searches; and (c) performance of real-time realization of probabilistic models in simulated annealing. The current design of microfluidics switch uses air pressure or thermal actuation to control micro-structured valves fabricated from two-layered Polydimethylsiloxane (PDMS). During the fabrication process, a membrane is formed where the control channel and flow channel intersect orthogonally. If the control channel layer is bonded on top of the flow channel layer, pushdown valves are formed. The dominant form of valve control is the use of air-pressure. Current state of the art microfluidics devices integrate numerous micro-valves (microfluidics large scale integration) that need to be independently controlled using separate pressure lines. The main control method is based on a branched pressure source implemented with pressure manifolds. Each manifold outlet is digitally controlled with dedicated hardware and software. Control manifolds are commercially available. For example, Festo Corporation commercialized a modular pressure manifold called MH-1 that can be configured to integrate an arbitrary number of pressure lines. The control of N number of pressure lines (on/off) requires N controllable digital lines. The Microfluidics Foundry at Stanford University established one popular method of controlling manifolds' digital lines. They distributed a micro-controller and an integrated circuit that can use a computer to configure each of a manifold's pressure line independently via MATLAB® or LabVIEW. Other companies have commercialized dedicated systems for controlling multiple pressure lines. For example, Elveflow® commercialized a line of products called OB-1™ that enable independent control of four pressure lines and Fluigent™ commercialized OEM, a line of products that enable the control of up to 8 pressure lines. However, such a control over the fluid is performed by utilizing one or more controllers that are entirely separate from the processor which collects and processes data from the (one or more) sensors that are used. This situation raises a very significant problem of synchronization between the fluid controllers and between the one or more processors that collects and analyzes data from the sensors.

Recently, a growing interest is focused in the integration of microfluidics platforms and sensors. Most commonly, those works include cellular acidification, cellular adhesion, oxygen consumption, and energy metabolites such as glucose uptake and lactate production. For example, Molecular Devices® commercialized Cytosensor® to measure extracellular acidification. Bionas® commercialized the Discovery 2500 System™ that continuously provides measurements of oxygen consumption and cell impedance. Sensor monitoring is accomplished by specialized hardware and software via different measures, most commonly changes in impedance, current, and electric potential. Others are based on light emission, ion selective field effect transistors and resonant frequency. Each of the sensing units requires a unique hardware and software module, which is able to capture the required measure, to record, analyze and display it to the user. For example, Molecular Devices® offers a variety of data acquisition and analysis software packages, such as the SoftMax®, which serves as the user interface to their popular sensing modules.

Still another challenge in the field of microfluidics arises from the need to provide scalability in increasingly complex platforms, as well as incorporation and adoption of emerging technologies (for example, in biomedical research), while this field still suffers from the distribution of the control units, processing resources, and lack of standardization. As discussed above, currently there is no single-processor on the micro-fluidic market that can control both sensors and fluids. In order to carry out a microfluidic task, the user has to purchase one or more controllers for controlling the fluid, and another separate processor for accumulating and analyzing data from the (one or more) sensors. In order to perform any real time task, there is a necessity to synchronize the signals between the one or more controllers and the processor, a task which is very difficult, particularly when high accuracy of timing is required. As a result of this situation, the prior art substantially does not enable performance of any real time optimization algorithm, even simple algorithms that comprise one or more positive or negative feedback loops.

To summarize, microfluidic systems become exceedingly complicated, where different aspects of control have to be configured separately. The use of distributed control interfaces is cumbersome, expensive, limits to a great extent a real time interdependent control-feedback, reduces the system's modularity and restricts its portability. Moreover, difficulties in synchronization between the different control modules often arise due to multiple latency properties. As a result of the lack of synchronization between various controllers and the one or more analyzing processors, and in order to complete the feedback loop, the prior art systems have required manual interventions, i.e., they lack the possibility for performing a fully automated feedback operation.

US 2014/0038166 discloses a feedback-based system for controlling fluids in microfluidic circuits. While suggesting a feedback-based operation, this publication still requires manual intervention in the control loop.

As noted, the creation of a microfluidic circuitry, for example, for the purpose of experimenting, testing, or analyzing is relatively complicated, as it involves a plurality of various components, processors, controllers, and sensors. Clearly, for operating all these circuit components, the providing of various voltage levels is required. Currently, each of the circuit components requires its own one or more power supplies, a fact which adds to the complication of the system.

In still another aspect, the creation of a microfluidic circuit involves modification or replacement of hardware (including microprocessors and controllers) in order to best fit the circuit requirements. This adaptation is quite complicated and expensive. An object of the present invention is also to reduce this burden.

It is therefore an object of the present invention to provide an apparatus which centralizes all aspects of microfluidics tasks, and provides an integrative, intuitive, and easily scaled or modified platform.

It is still another object of the present invention to provide an apparatus which enables performance of fully automated feedback operations.

It is still another object of the invention to provide a microfluidic system which enables real time interaction between various modules and components, therefore expanding and improving the scope of experimenting, analysis, and data collection in various fields.

It is still another object of the present invention to provide a platform which enables the utilization of different sensors in a modular manner, allowing easy and fast modification of the microfluidic system.

Other objects and advantages of the invention will become apparent as the description proceeds.

## Summary of the Invention

An apparatus for controlling a microfluidic circuit, comprising: (a) a single microprocessor which is positioned within a single microprocessor module, said single microprocessor being used for performance in real time of: (i) control of microfluidic components within said microfluidic circuit; (ii) accumulation of data from sensors of the microfluidic circuit; and (iii) analysis of said accumulated data in order to possibly adjust in real time at least one of the components of the microfluidic circuit based on said analysis results, thereby providing a real-time feedback; (b) a digital control bus for communicating digital control signals from the microprocessor module to one or more digitally-controlled microfluidic components; and (c) a sensors bus for communicating signals from one or more sensors to the microprocessor module.

Preferably, the apparatus further comprises an analog control bus for communicating analog control signals from the microprocessor module to one or more analogically-controlled microfluidic components.

Preferably, the apparatus further comprises a voltage stabilization and distribution module, for distributing different voltage levels to one or more components of the microfluidic circuit.

Preferably, the microprocessor is an open source-type microprocessor.

Preferably, the microprocessor is an open source-type microprocessor whose structure is defined by the user by means of a user interface from a touch screen within the apparatus. Preferably, the apparatus is a stand-alone, multipurpose, and unified apparatus.

Preferably, said one or more digitally controlled microfluidic components are selected from microfluidic valves, microfluidic manifolds, and microfluidic pumps.

Preferably, said one or more analogically controlled microfluidic components are one or more analog pressure regulators.

Preferably, the apparatus further comprises a display bus for communicating with a conventional display or touch screen display.

Preferably, said touch screen display is used for defining one or more circuit operation set-ups, for providing user inputs and output.

Preferably, the apparatus further comprises one or more USB buses, for communicating with one or more USB devices.

Preferably, the apparatus further comprises an RS-232 module, for communicating with one or more of microfluidic components.

Preferably, the sensors bus is in an analog form, which is converted to digital form by means of one or more internal A/D units within the single microprocessor.

Preferably, the sensors bus is in an analog form, which is converted to digital form by means of one or more A/D units external to the microprocessor, but located within the microprocessor module and on the sensors module.

**Brief description of the Drawings**

In the drawings:

- Fig. 1 shows a typical microfluidic system 100, according to the prior art;
- Fig. 2 shows a structure of the microfluidic system 200, according to an embodiment of the present invention;

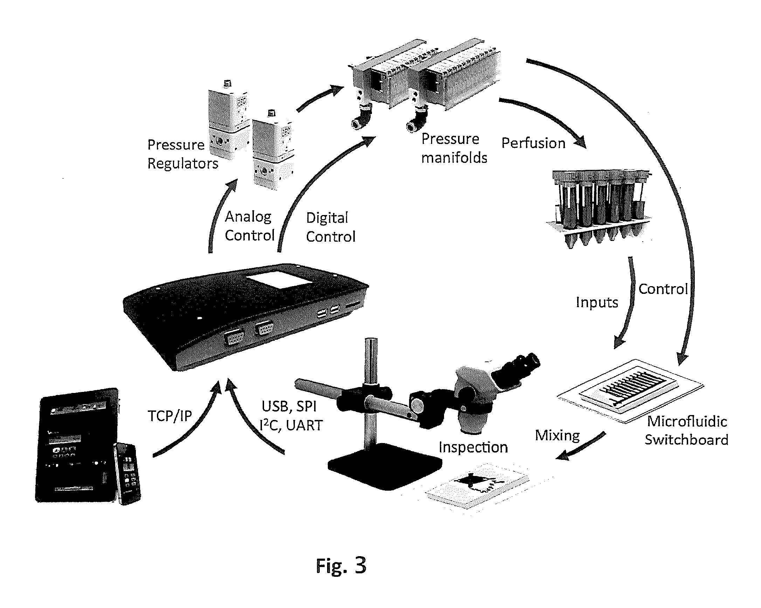

- Fig. 3 illustrates the structure of the invention, and of its respective components; and
- Fig. 4 illustrates the external casing and terminals of the microprocessor module, according to an embodiment of the invention.
- Fig. 5 illustrates results from an optimization process for the creation of a specific color from a set of unknown color sources. All three optimization algorithms showed significant improvement over random walk.

**Detailed Description of Preferred Embodiments of the Invention**

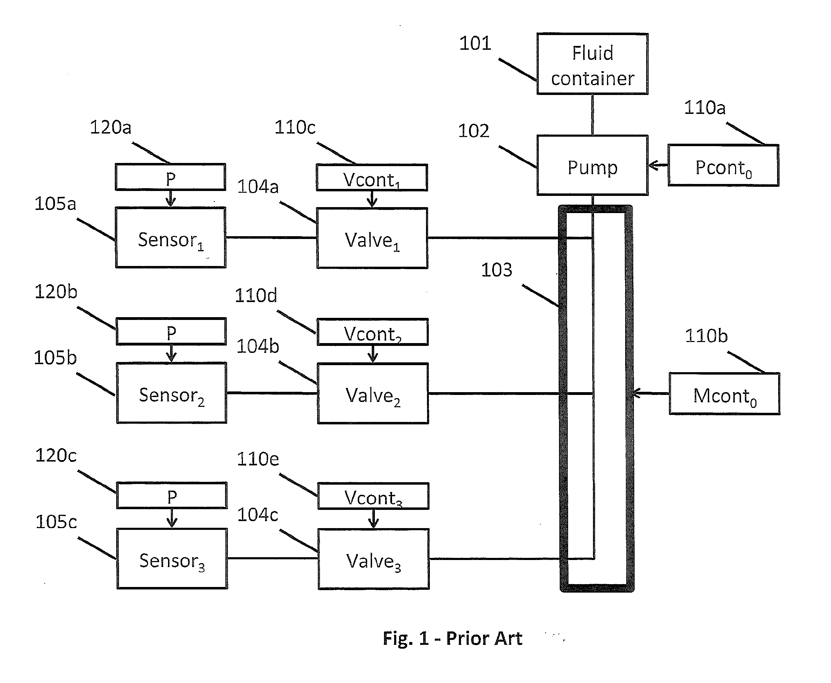

Fig. 1 shows a typical and simple microfluidic system 100, according to the prior art. The system of Fig. 1 is simplified, to provide better understanding. The system comprises a fluid container 101, pump 102, manifold 103, one or more micro-valves 104a, 104b, 104c, ... , and one or more sensors 105a, 105b, 105c, etc. According to the prior art, each of the fluidic components, i.e., the one or more pumps 102, manifolds 103, and valves 104 are controlled by one or more fluidic controllers 110a-110e, respectively. In some cases, a single fluidic controller 110 is applied to perform all the tasks of the separate controllers 110a-110e. One or more processors 120a, 120b, 120c,... are used to accumulate data from the sensors 105a, 105b, and 105c, respectively. Typically, a single processor 120 performs said accumulation task, and this processor is also used for post-analysis of the accumulated data.

As shown, at least two separate processing units (i.e., controllers 110 and processors 120) are used within the microfluidic system 100 of the prior art, particularly as the micro-controllers 110 are not adapted to collect and analyze data from the sensors 105. Furthermore, the one or more processors 120 are not adapted to control any of the fluidic components 102, 103, or 104. In view of this situation, any necessity to perform a real-time operation, even a "simple" task of affecting the flow rate within the fluid lines based on a feedback from the sensors 105 requires accurate synchronization between the one or more controllers 110 and the one or more processors 120. However, unfortunately the task of accurately synchronizing between the one or more controllers 110 and the one or more processors 120 is very difficult, therefore, this synchronization is performed in the prior art manually. In view of this situation, particularly due to the difficulty of synchronization, the prior art microfluidic systems substantially do not allow performance of automated real time feedback operations, and the data acquisition can seldom be analyzed in time for experimental parameters to be adjusted automatically. This situation is a drawback which significantly affects the performance of many researches, experiments, and even treatments of deceases in various fields.

Moreover, the lack of standardization between the various controllers, processors, and components, and the lack of centralization, results in the need to provide separate power supplies for each device, a fact which increases the complication of the system.

As becomes clear from the above, the operation a microfluidic circuit involves performance of three main tasks:

    a. Control: This task involves the control over the various circuit components, such as valves, pumps, switches, containers, etc.
    b. Data Collection: This task involves the collection of data from the circuit components, such as from the various sensors; and
    c. Analysis: This task involves analysis which is performed based on the collected.

As becomes clear from the above, in the prior art circuits at least the Control and Analysis tasks are performed by separate processing units. The data collection task is sometimes performed by the one or more processing units that carry out the control task, and in other cases, the data accumulation task is performed by the generally one processor that carry out the analysis task. As shown, at least two separate processing units (microprocessors and microcontrollers) are involved, that typically lack synchronization between them. This situation in fact prevents the possibility of performing an automated feedback.

In one aspect, the present invention provides a microfluidic system which overcomes all the above drawbacks. According to the present invention, all the activities, i.e., Control, Data Collection, and Analysis are performed by a single microprocessor. As a result, the apparatus of the invention can carry out complex optimization algorithms, such as, multiple hill climbing algorithms, and genetic algorithms. Each of these optimization algorithms presents a different set of challenges, including: the implementation of prioritized data structures in genetic algorithm, distributed computational efforts in multiple-hill climbing searches, and real-time realization of probabilistic models in simulated annealing.

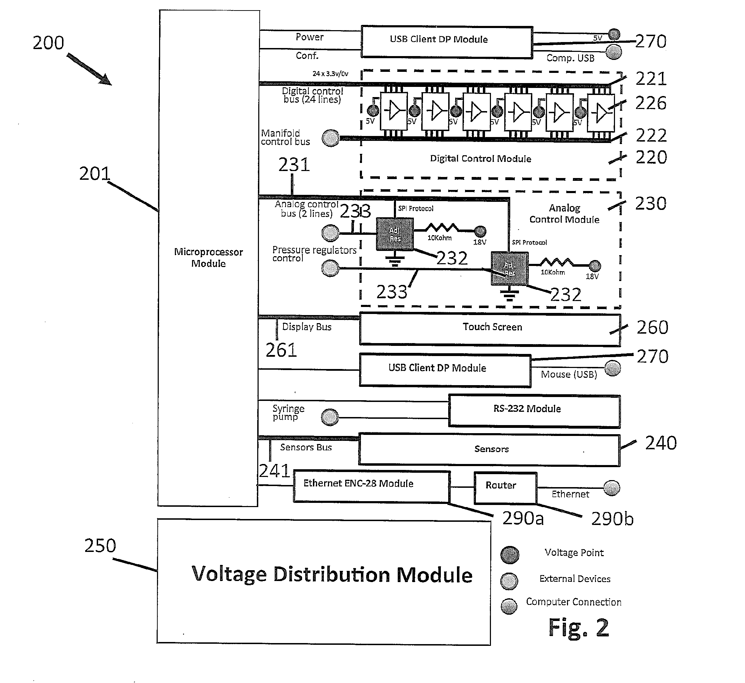

Fig. 2 shows a structure of the microfluidic apparatus 200, according to an embodiment of the present invention. The apparatus 200 comprises a single microprocessor which is positioned on a microprocessor module 201, which performs the control over all the microfluidic components, data collection, and processing of the accumulated data, and optionally also analysis thereof. Therefore, such structure eliminates the need for synchronization between two or more processing units (or controllers) as in the prior art, and it enables performance of real time activities, such as positive or negative feedback, alteration of system parameters based on the accumulated data, and more.

The apparatus 200 comprises, in addition to the microprocessor module 201, at least the following modules and components:

A. **Digital Control Module 220:** The digital control module 220 controls all the digital microfluidic components in the circuit. In one embodiment, the digital control module controls one or more manifolds, each comprising plurality of discreet valves 226. The digital control is directly provided to the plurality of valves 226 (or any other one or more microfluidic components) over the digital control bus 221, while the result of said control is provided over the manifold control bus 222. Each micro-valve 226 operates by means of a DC voltage supply (for example 5V), and an input pressure line (not shown in Fig. 2). The digital control module 220 may control, for example, 24 fluid lines.

B. **Analog Control Module 230:** As noted above, there are various microfluidic components, such as syringe pumps, that require analog control. The analog control module provides such control to one or more of such analog units. In one embodiment, the microprocessor module of the present invention outputs over an analog control bus 231 an analog voltage to directly control the analog component respectively. In another embodiment, the microprocessor module outputs a digital signal, which is in turn converted to an analog signal by means of a D/A converter, which is included within the analog control module 230. The analog voltage is provided into one or more pressure regulators 232, respectively. The pressure regulator receives both said analog voltage and a pressure input (not shown), and it outputs a pressure 233, which is proportional to said analog input voltage. Said analog control module 230 may control, for example, two analog microfluidic components, such as syringes, etc.

C. **Sensors Bus:** The microprocessor module 201 of the present invention receives data from one or more sensors 240 that are located within the microfluidic circuit. Preferably, the sensors measurements are provided into the microprocessor module 201 over a sensors bus 241. In one embodiment, the sensors bus is in an analog form, which is converted to a digital form by means of one or more internal A/D units within the single microprocessor, which is in turn located within microprocessor module 201. In another embodiment, the A/D units are external to the microprocessor, but are still located within the microprocessor module 201, and are located, for example, within sensors module 240.

The microfluidic apparatus 200 of the invention preferably also comprises the following modules and components:

D. **A Voltage Stabilization and Distribution Module 250:** This module provides a series of different voltage supplies to the various components of the system 200. Module 250 in fact provides various voltages to modules and components within the apparatus 200, as well as voltages to the circuit components that are connected to the apparatus, but are in fact located outside of the casing of the apparatus 200. This module is highly important, as is eliminates the need for providing a separate power supply to each component of the microfluidic system, as was required by the prior art. According to the invention, each of such external components receives its voltage supply from a single source, i.e., from the apparatus 200.

E. **User Interface and Touch Screen 260:** The touch screen 260 serves as the user interface to the apparatus 200. The user in fact interacts with the microprocessor module 201 via a display bus 261. By means of said user interface the user in fact can define a set-up for the operation of the circuit (i.e., parameters, procedures, timings, fluid volumes, etc.), can manually operate the apparatus, and can receive results of the analysis. Furthermore, and as will be elaborated hereinafter, when an open source type microprocessor is used (within the microprocessor module 201), the user may also define the structure of hardware components (such as the structure of the microprocessor itself). This is still another significant advantage of the present invention.

**F. US client DP Modules 270:** One of the modules 270 may be used, for example, for the interaction of a mouse with the microprocessor module. A second of these modules may be used for a keyboard, if the touch screen 260 is a conventional screen. Alternatively, any other typical USB device may be connected, such as a disk-on-key.

**G. RS-232 Module:** This module, for example, enables digital activation of a syringe pump or other apparatuses via a serial communication. Alternatively, other data may be conveyed over this module to other devices.

**H. Ethernet module and Router 290:** These modules are used, for example, provide a remote communication, data exchange, and operation of the apparatus 200.

As illustrated, in the embodiment of Fig. 2 the apparatus 200 comprises only a single microprocessor, which is located within a microprocessor module 201, which is used to perform all the functions of the microfluidic system, such as control over the various components (e.g., valves, manifold, and analog components). The same microprocessor also accumulates data from the various sensors, and is also used for processing and analyzing this data. The fact that the same microprocessor is used to perform all said functions eliminates the need to synchronize between various processing units (i.e., one or more microprocessors and one or more controllers). As said, this synchronization between two or more processing units of various types is complicated, and therefore was very seldom done in prior art microfluidic systems. Therefore, the microfluidic systems of the prior art in fact could not at all perform a real-time automated feedback, for example, to adjust and fine tune the circuit operation as a result of a real time analysis of the data collected from the sensors (or other fluid components). As said, the apparatus 200 of the present invention overcomes all said drawbacks.

The single microprocessor within the apparatus 200 of the present invention is preferably an open-source microprocessor. An open source microprocessor enables a user to define not only the software that runs the microfluidic circuit (i.e., the set-ups, the procedures, the analysis, etc.), but also the hardware structure of the microprocessor. This feature increases even more the flexibility that can be used by the apparatus 200 of the invention.

As shown, the present invention provides a stand-alone, multi-purpose, and unified apparatus 200 for the easy creation of microfluidic circuits of various complexities. The apparatus of the invention is advantageous over the prior art microfluidic systems, at least for the following reasons:

a. The apparatus enable performance of an automated real-time feedback in a microfluidic circuit;

b. The apparatus of the invention eliminates the requirement for manual intervention in performance of a feedback procedure;

c. The apparatus of the invention eliminates the need to use plurality of microcontrollers, each having its own standard, for controlling the microfluidic components;

d. The apparatus of the invention eliminates the need to use a plurality of separate and various power supplies, for feeding the various microfluidic components. According to the present invention, all such components, whether internal to the device, or external, receive their voltage supply from within the device;

e. The apparatus of the invention resolve the non-standardization between the various microprocessors and microcontrollers, as exists in prior art systems. In contrary to the prior art systems, the apparatus of the invention requires the user to interact only with a single microprocessor.

f. The apparatus of the invention provides the first use of an open-source microcontroller based platform, enabling modular modification of the system in means hardware modification and interchangeable sensors and fluid components.

**Examples**

Microfluidic platforms are composed of discrete analog and digital perfusion components and sensors that have separate communication protocols, power requirements, and control interfaces limiting system integration. To address this, the inventors designed a prototype control unit based on Gadgeteer FEZ Spider mainboard containing 32-bit ARM7 microprocessor and 11 MB of user available RAM, extended with the Hub AP5 board for a total of 23 control sockets. The control unit was connected to analog pressure regulators driving two 12-valve pressure manifolds that control a microfluidic switchboard and positive-pressure perfusion. The switchboard fed into an equi-pressure combinatorial mixer containing an inspection chamber monitored by a UART-controlled optical CCD sensor connected back to the FEZ Spider mainboard, completing the circuit.

To bridge between the control unit and the perfusion components, a microfluidic shield was designed, which bridges variable power consumption, modulates power distribution from a standard AC source, and implements control of analog lines. Specifically, analog signal modulation was carried out using passive linear voltage dividers, featuring an output range of 0-10V and an 8-bit SPI controlled potentiometer with volatile memory. In addition, as solenoid valve actuation requires 1W (5-10V), a series of high current Darlington transistor arrays were implemented, supporting 24 units of 1W (5-10V) digital lines. This integration permits the fully automated implementation of optimization algorithms, utilizing either an embedded touch screen or remote interface through standard TCP/IP, thereby improving system portability and miniaturization. The prototype system provides the user with hardware plug-and-play interface embedded within the Microsoft .Net microenvironment that enables rapid interaction utilizing programs such as MATLAB for user interface design.

Microfluidics permits both batch and continuous on-chip mixing. However, changing mixture combinations produces fluctuations in flow and shear forces, either due to batch loading or by adding or subtracting fluid from a passive mixer. As flow and shear fluctuations disturb biological applications and complicate sensor synchronization, the inventors designed a novel equi-pressure combinatorial mixer, composed of a microfluidic switchboard and a passive mixer. The microfluidic switchboard consists of 11 inlets and a common outlet that are regulated by self-addressable micromechanical valves. The valves were controlled by one pressure manifold, delivering precise combinations of fluids to the mixer unit. Uniquely, flow is driven by positive pressure provided by a second, independently controlled pressure manifold. Pressure across the manifold is held constant by an analog regulator, resulting in an equal pressure distribution on all open ports, and a constant fluid velocity irrespective of the number and combination of inputs. Importantly, the delay time required to refill the inspection chamber becomes constant, even with arbitrary combinations of inputs, allowing the inventors to automate sensor sampling.

To demonstrate this behavior, a serial dilution curve was designed, while automatically monitoring perfusion rates and color intensity. Results show that the perfusion rate variability was maintained within 2% of baseline during pattern adjustment. Delay time remained constant in each step.

Optimization algorithms present computational challenges ranging from data structures to multithreading. To demonstrate the ability of the microfluidic system of the invention to execute and completely automate optimization algorithms, the inventors have optimized color matching using the combinatorial mixer described above. Three randomly generated target colors were provided to the optical CCD sensor and they split into their red, green, and blue components. *Fitness* was defined as the additive sum of distances between the target and measured colors, for each component. Search space was composed of 11 random colors, constituting $2^{11}$ different states.

The inventors first implemented a naïve random walk to define the baseline. The algorithm required the microprocessor to keep track of best fitness, producing relative poor results in 6 to 8 cycles. Multiple hill climbing is a more advanced algorithm that iteratively attempts to improve fitness by changing a single parameter, or in the specific present case to remove or add a color to the mixture. As hill-climbing searches can get stuck at a local minima, the microprocessor was used to generate three independent parallel searches using multithreading. Multiple hill climbing produced excellent results in 9 to 10 cycles.

Simulated annealing is a probability-guided algorithm for approximating a global optimum in a large search space. At each step, the algorithm considers an alternative and decides whether to jump or not based on probability function P, defined as,

$$P(s,T) = \begin{cases} e^{-\frac{\Delta f(s)}{T}}, & \Delta f(s) \geq 0 \\ 1, & \Delta f(s) < 0 \end{cases}$$

where $\Delta f(s)$ is the difference in fitness between two states and T is a parameter that decreases risk tolerance with time. The inventors used the control unit to implement simulated annealing, when T was initially set to 80 decreasing 10 per cycle. Simulated annealing produced excellent results, continuing a steady improvement even after 12 cycles.

Finally, the inventors implemented a genetic algorithm that adaptively exploits historical information to direct the search, using prioritized data structures. The algorithm evaluates 4 randomly generated states, selecting the top 2 states to recombine as new candidates. The candidates are ranked against the early states and the top 4 candidates constituted the next generation. The control unit constantly assessed progress in terms of average fitness, worst and best states. Genetic algorithm produced excellent results in 8 to 9 generations.

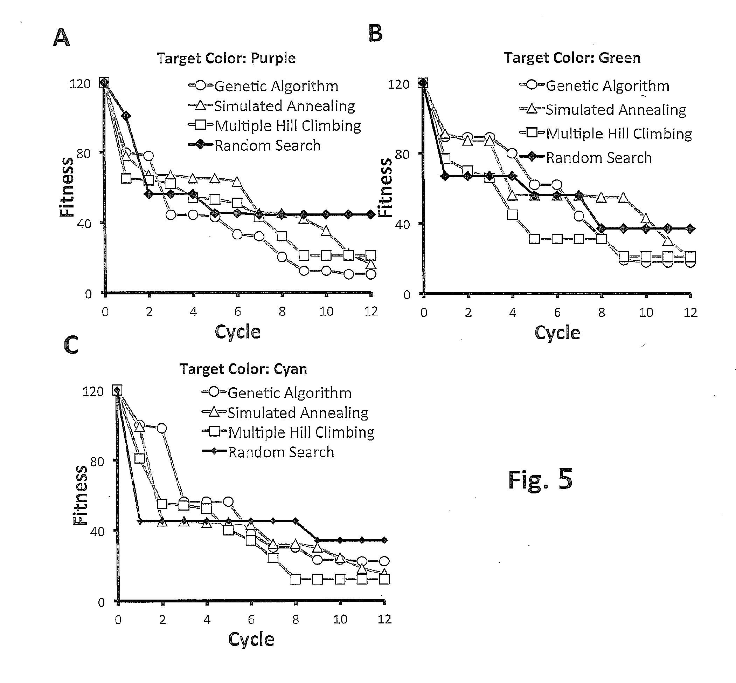

As expected, all three optimization algorithms showed significant improvement over random walk as clearly shown in Figure 5 - for each generated color, each one of the examined algorithms produce better results (lower fitness) at the end of the 12th cycle. An important aspect of our results is the observation that while genetic algorithm and multiple hill climbing converged faster than simulated annealing, the latter showed constant improvement even after 12 cycles. It became clear that the system of the invention is robust, being able to execute different algorithms automatically, and this is a significant advantage.

Microfluidic technology promises to improve the analysis and synthesis of materials, by minimizing sample size, precisely controlling the microenvironment and by rapidly combining multiple chemical processes. However, while microfluidic chips are small, the cluster of computers needed to control optics, perfusion and sensors complicates the transfer microfluidic technology between laboratories and its translation to clinical or industrial settings. The system of the invention allows a complete integration of a microfluidic system using a single microprocessor-based control unit. Analog perfusion and digital valve control were regulated using a newly designed microfluidic shield, while Microsoft's .NET plug-and-play interface allowed the integration of a UART-controlled optical CCD sensor, LCD touch screen and TCP/IP access. In fact, this open environment allowed the inventors to access libraries of commercially available Gadgeteer sensors and open source software. Importantly, system integration can naturally synchronize between sensors, valves, and fluid, permitting the realization of feedback loops and complex control logic.

The system integration, which is provided by the invention goes beyond current commercial and academic efforts to control flow in microfluidic systems. For example, Fobel's open-source digital microfluidic automation system enables the control of drop position and velocity using electro-wetting, but it cannot be readily extended to handle flow components or complex algorithms. The power of the system of the invention was demonstrated by the implementation of computationally intensive optimization algorithms, including genetic algorithm, multiple-hill climbing, and simulated annealing. While the invention demonstrated a solution to a simple color-matching problem, it is readily applicable for other systems. Microfluidics permitted the screening of 192 plugs using an optical indicator dye, but library construction and evolution was carried out in a microliter plate. Similarly, Pascali and colleagues approach to optimize PET tracer production relied on an off-chip analytical characterization and evolution. Cells had to be compartmentalized in one device, incubated and introduced manually into a second device for sorting. The system of the invention enables a complete automation of many such processes, dramatically improving yield and permitting the realization of complex optimization algorithms.

As noted above, the inventors used a Gadgeteer mainboard and extension modules for the prototype. The control unit was composed of a 32-bit ARM7 microprocessor mounted on the Microsoft FEZ Spider Gadgeteer mainboard. Mainboard functionality was extended with Hub AP5 module that adds 9 additional sockets, a USB client Dual Power module to enable microprocessor programming, a TE35 LCA 3.5" touchscreen display module, and USB and RS-232 modules that allows the control of sensors and peripherals. A serial camera L1 module was added directed for optical inspection. Finally, Ethernet ENC28 module provided a TCP/IP operation mode.

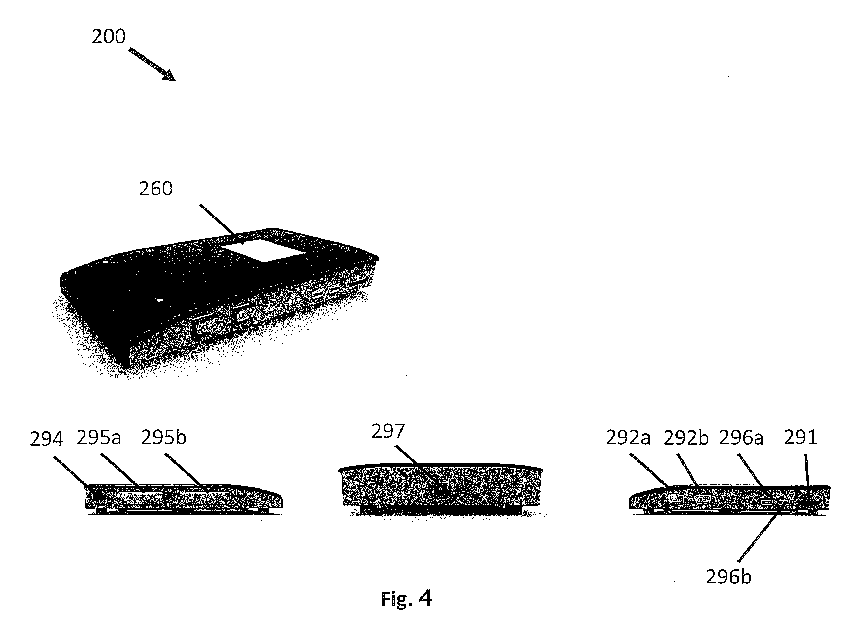

The microfluidic shield was designed using Dip-Trace software, and printed in a two-layer layout. The apparatus' casing was designed and fabricated, as shown in Fig. 4. The exemplified prototype system, operating according to the invention, required a branched voltage module that integrates numerous voltage stabilization circuits and an array of capacitors that filter high frequency ripple voltages and spikes. The control unit is connected to a standard 220v 50 Hz AC power outlet, which was electromagnetically inducted to 5v using Mean Well (New Taipei City, Taiwan) NES-35-5 transformer that powers the microprocessor and the digital control unit and to 26v using Mean Well NES-2-24 transformer that powers the pressure regulators and the analog voltage module via an 18v linear voltage regulator purchased from Toshiba (Tokyo, Japan). Fig. 4 shows the general external views of the apparatus 200, according to an embodiment of the invention, which comprises: a touch screen 260, an Ethernet port 294, two digital outlets 295a and 295b, a power inlet 297, two analog outlets 292a and 292b, two USB ports 292a and 292b, and an opening 291 for the insertion of an SD card.

24 controllable high current digital lines were controlled by general-purpose input output (GPIO) sockets via a series of high current TD62783 Darlington transistor arrays purchased from Toshiba. Each driver supports 3.3v logic operation and a 5v driving voltage. The analog control module was composed of passive linear voltage dividers, which were implemented using a passive resistor and an 8-bit SPI controlled MCP4131 potentiometer with volatile memory purchased from Microschip (Chandler, AZ). Gadgeteer driver library was expanded to support the SPI data protocol controlling the potentiometer.

While some embodiments of the invention have been described by way of illustration, it will be apparent that the invention can be carried into practice with many modifications, variations and adaptations, and with the use of numerous equivalents or alternative solutions that are within the scope of persons skilled in the art, without departing from the spirit of the invention or exceeding the scope of the claims.

## Claims

1. An apparatus for controlling a microfluidic circuit, comprising:

   (a) a single microprocessor which is positioned within a single microprocessor module, said single microprocessor being used for performance in real time of: (i) control of microfluidic components within said microfluidic circuit; (ii) accumulation of data from sensors of the microfluidic circuit; and (iii) analysis of said accumulated data in order to possibly adjust in real time at least one of the components of the microfluidic circuit based on said analysis results, thereby providing a real-time feedback;
   (b) a digital control bus for communicating digital control signals from the microprocessor module to one or more digitally-controlled microfluidic components; and
   (c) a sensors bus for communicating signals from one or more sensors to the microprocessor module.

2. An apparatus for controlling a microfluidic circuit according to claim 1, further comprising an analog control bus for communicating analog control signals from the microprocessor module to one or more analogically-controlled microfluidic components.

3. An apparatus according to claim 1, further comprising a voltage stabilization and distribution module, for distributing different voltage levels to one or more components of the microfluidic circuit.

4. An apparatus according to claim 1, wherein the microprocessor is an open source-type microprocessor.

5. An apparatus according to claim 1, wherein the microprocessor is an open source-type microprocessor whose structure is defined by the user by means of a user interface from a touch screen within the apparatus.

6. An apparatus according to claim 1, wherein the apparatus is a stand-alone, multipurpose, and unified apparatus.

7. An apparatus according to claim 1, wherein said one or more digitally controlled microfluidic components are selected from microfluidic valves, microfluidic manifolds, and microfluidic pumps.

8. An apparatus according to claim 1, wherein said one or more analogically controlled microfluidic components are one or more analog pressure regulators.

9. An apparatus according to claim 1, further comprising a display bus for communicating with a conventional display or touch screen display.

10. An apparatus according to claim 8, wherein said touch screen display is used for defining one or more circuit operation set-ups, for providing user inputs and output.

11. An apparatus according to claim 1, further comprising one or more USB buses, for communicating with one or more USB devices.

12. An apparatus according to claim 1, further comprising an RS-232 module, for communicating with one or more of microfluidic components.

13. An apparatus according to claim 1, wherein the sensors bus is in an analog form, which is converted to digital form by means of one or more internal A/D units within the single microprocessor.

14. An apparatus according to claim 1, wherein the sensors bus is in an analog form, which is converted to digital form by means of one or more A/D units external to the microprocessor, but located within the microprocessor module and on the sensors module.

Fig. 1 - Prior Art

EP 2 921 919 A1

Fig. 2

Fig. 3

Fig. 4

Fig. 5

Europäisches Patentamt
European Patent Office
Office européen des brevets

# EUROPEAN SEARCH REPORT

Application Number

EP 15 15 9909

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/225493 A1 (PIOREK BRIAN D [US] ET AL) 6 September 2012 (2012-09-06) | 1-14 | INV. G05B19/042 G06F19/00 |
| Y | * paragraphs [0008] - [0014], [0017] - [0044], [0057] - [0086], [0091], [0092]; figure 1 * | 1-14 | |
| X | US 2008/182301 A1 (HANDIQUE KALYAN [US] ET AL) 31 July 2008 (2008-07-31) * paragraphs [0009], [0014], [0019], [0028], [0046], [0054], [0058], [0063] - [0071], [0078], [0085], [0094], [0103], [0105], [0114], [0116] * * paragraphs [0248] - [0261], [0292]; figures 3,8,36,42a,46 * | 1-14 | |
| X | US 2002/143437 A1 (HANDIQUE KALYAN [US] ET AL) 3 October 2002 (2002-10-03) * paragraphs [0001], [0009] - [0012], [0020], [0024], [0045], [0052] - [0056], [0062], [0084], [0085], [0099], [0105] - [0107], [0115] - [0119] * * paragraphs [0128] - [0141]; figures 2,3B * | 1-14 | TECHNICAL FIELDS SEARCHED (IPC) G06F G05B G01N |
| Y | US 2013/239082 A1 (AMIN AHMED MOHAMED EID [US] ET AL) 12 September 2013 (2013-09-12) * paragraphs [0003], [0004], [0008], [0009], [0014], [0015], [0019], [0020], [0035] - [0040] * | 1-14 | |

The present search report has been drawn up for all claims

| Place of search | Date of completion of the search | Examiner |
|---|---|---|
| Munich | 12 August 2015 | Postemer, Patricia |

EPO FORM 1503 03.82 (P04C01)

**EP 2 921 919 A1**

## ANNEX TO THE EUROPEAN SEARCH REPORT
## ON EUROPEAN PATENT APPLICATION NO.

EP 15 15 9909

This annex lists the patent family members relating to the patent documents cited in the above-mentioned European search report.
The members are as contained in the European Patent Office EDP file on
The European Patent Office is in no way liable for these particulars which are merely given for the purpose of information.

12-08-2015

| Patent document cited in search report | | Publication date | Patent family member(s) | | Publication date |
|---|---|---|---|---|---|
| US 2012225493 | A1 | 06-09-2012 | US | 2012225493 A1 | 06-09-2012 |
| | | | WO | 2011022400 A1 | 24-02-2011 |
| US 2008182301 | A1 | 31-07-2008 | AU | 2008317492 A1 | 30-04-2009 |
| | | | CA | 2698253 A1 | 30-04-2009 |
| | | | CN | 101802164 A | 11-08-2010 |
| | | | CN | 103695291 A | 02-04-2014 |
| | | | CN | 103695292 A | 02-04-2014 |
| | | | CN | 103695302 A | 02-04-2014 |
| | | | CN | 103695307 A | 02-04-2014 |
| | | | CN | 103695310 A | 02-04-2014 |
| | | | CN | 103725592 A | 16-04-2014 |
| | | | CN | 103725603 A | 16-04-2014 |
| | | | CN | 103740588 A | 23-04-2014 |
| | | | CN | 103756867 A | 30-04-2014 |
| | | | EP | 2179025 A2 | 28-04-2010 |
| | | | JP | 5261485 B2 | 14-08-2013 |
| | | | JP | 2010533490 A | 28-10-2010 |
| | | | JP | 2013150634 A | 08-08-2013 |
| | | | JP | 2013167639 A | 29-08-2013 |
| | | | JP | 2013167640 A | 29-08-2013 |
| | | | JP | 2013167641 A | 29-08-2013 |
| | | | JP | 2013172726 A | 05-09-2013 |
| | | | JP | 2013172727 A | 05-09-2013 |
| | | | JP | 2013172728 A | 05-09-2013 |
| | | | JP | 2013172729 A | 05-09-2013 |
| | | | JP | 2013172730 A | 05-09-2013 |
| | | | US | 2008182301 A1 | 31-07-2008 |
| | | | US | 2011207140 A1 | 25-08-2011 |
| | | | US | 2013101990 A1 | 25-04-2013 |
| | | | WO | 2009054870 A2 | 30-04-2009 |
| US 2002143437 | A1 | 03-10-2002 | EP | 1390145 A1 | 25-02-2004 |
| | | | EP | 2363207 A1 | 07-09-2011 |
| | | | JP | 4509479 B2 | 21-07-2010 |
| | | | JP | 2004536689 A | 09-12-2004 |
| | | | US | 2002143437 A1 | 03-10-2002 |
| | | | US | 2006036348 A1 | 16-02-2006 |
| | | | US | 2012022695 A1 | 26-01-2012 |
| | | | US | 2013280131 A1 | 24-10-2013 |
| | | | US | 2014377850 A1 | 25-12-2014 |
| | | | WO | 02078845 A1 | 10-10-2002 |
| US 2013239082 | A1 | 12-09-2013 | NONE | | |

EPO FORM P0459

For more details about this annex : see Official Journal of the European Patent Office, No. 12/82

**EP 2 921 919 A1**

**REFERENCES CITED IN THE DESCRIPTION**

**Patent documents cited in the description**

- US 20140038166 A